# EUROPÄISCHE PATENTSCHRIFT

(11) **EP 1 932 489 B1**
(45) Veröffentlichungstag und Bekanntmachung des Hinweises auf die Patenterteilung: **03.07.2019**
(21) Anmeldenummer: 07020749.3
(22) Anmeldetag: 30.11.2006
(51) Int. Cl.: A61C 1/08

(54) **Medizinisches Handstück mit Beleuchtungsvorrichtung**
Medical handpiece with a lighting device
Pièce à main avec dispositif d'éclairage

(43) Veröffentlichungstag der Anmeldung: 18.06.2008
(62) Teilanmeldung aus: 06024780.6
(73) Patentinhaber: W & H Dentalwerk Bürmoos GmbH, 5111 Bürmoos (AT)
(72) Erfinder: Schatz, Norbert, 5111 Bürmoos (AT); Schmiedlechner, Karl, 5121 Ostermiething (AT)

(56) Entgegenhaltungen:
- EP-A- 1 112 721
- EP-A- 1 693 021
- WO-A-2006/089104
- DE-A1- 19 654 400
- DE-U1- 20 113 692
- US-A- 5 683 246

## Beschreibung

Die vorliegende Erfindung betrifft ein medizinisches, insbesondere dentales Handstück mit einer Beleuchtungsvorrichtung, die zumindest ein optisches Halbleiterelement umfasst.

Aus der Patentanmeldung JP 10165419 A ist ein dentales Handstück bekannt, das eine Beleuchtungsvorrichtung aufweist, die Strahlung unterschiedlicher Wellenlängen abgeben kann, um damit unterschiedliche Behandlungen durchführen zu können. Das Handstück umfasst dafür mehrere Lichtquellen in Form von LEDs und einen Schalter, über den wahlweise eine oder mehrere LEDs betrieben werden können, so dass zum Beispiel grünes oder blaues Licht für Behandlungen oder weißes Licht zur Ausleuchtung der Behandlungsstelle emittiert wird.

Nachteil ist, dass der Aufbau dieses Handstücks kompliziert ist und viel Platz benötigt, da mehrere LEDs, ein Schalter und elektronische oder mechanische Schaltelemente im Handstück untergebracht werden müssen. Aufgrund unterschiedlichster, in Handstücken mit einem Anschluss für in Bewegung versetzbare Werkzeuge enthaltener Bauteile, wie zum Beispiel Antriebselemente, Werkzeugaufnahmen, Medienleitungen etc. ist die Integration weiterer Elemente nicht unbeschränkt möglich bzw. wäre nur möglich, wenn die Außenabmessungen des Handstücks vergrößert werden würden. Da insbesondere bei dentalen Anwendungen der im Mundraum vorhandene Platz sehr gering ist und auch die Sicht des Anwenders auf die Präparationsstelle oftmals eingeschränkt ist, sind jedoch vergrößerte Außenabmessungen nicht erwünscht.

Aus der Patentanmeldung EP 1 112 721 A1 ist ein medizinisches oder dentalmedizinisches Handstück gemäß dem Oberbegriff des Anspruchs 1 bekannt.

Das Dokument US 5,683,246 offenbart, dass ein Epoxy-Klebstoff verwendet wird, um die Verbindung zwischen Leitungen zu bedecken.

Der vorliegenden Erfindung liegt damit die Aufgabe zugrunde ein medizinisches, insbesondere dentales Handstück mit einer Aufnahme für in Bewegung versetzbare Werkzeuge und mit einer Beleuchtungsvorrichtung zu schaffen, mit der Behandlungen bei unterschiedlichen Betriebsparametern, zum Beispiel unterschiedlichen Wellenlängen durchführbar sind, wobei das Handstück möglichst einfach aufgebaut sein soll und es zu keiner Vergrößerung der Außenabmessungen des Handstücks kommen soll.

Diese Aufgabe wird gemäß der vorliegenden Erfindung durch ein medizinsches, insbesondere dentales Handstück mit den Merkmalen des Anspruchs 1 gelöst. Besonders vorteilhafte Ausführungsformen sind in den Unteransprüchen angeführt.

Das beschriebene medizinische, insbesondere dentale Handstück weist eine Beleuchtungsvorrichtung mit zumindest einem optischen Halbleiterelement auf, wobei das zumindest eine optische Halbleiterelement zumindest teilweise im Inneren des Handstücks angeordnet ist und wobei es lösbar mit dem Handstück verbunden ist. Durch diesen Aufbau wird es dem Anwender ermöglicht, in einfacher Weise das für die jeweilige Behandlung benötigte optische Halbleiterelement, das zum Beispiel eine bestimmte, gewünschte Leistungsstärke aufweist und / oder eine gewünschte Wellenlängen emittiert, mit dem Handstück zu verbinden. Das Handstück kann somit für unterschiedliche Anwendungen eingesetzt werden, ohne dass dafür weitere, Platz verbrauchende Bauteile wie Schalter etc. notwendig sind. Die Außenabmessungen des Handstücks bleiben damit im Vergleich zu bekannten Handstücken unverändert.

Durch die Anordnung des zumindest einen optischen Halbleiterelements zumindest teilweise im Inneren des Handstücks wird des Weiteren gewährleistet, dass das optische Halbleiterelement die Handhabung des Handstücks nicht behindert oder beeinträchtigt. In einem bevorzugten Ausführungsbeispiel sind auch die elektrischen Bauteile, die das optische Halbleiterelement mit Strom versorgen, insbesondere Kabel und Kontakte im Handgriff untergebracht, wodurch die Handhabung des Handstücks weiter verbessert wird.

Ein weiterer Vorteil des beschriebenen Handstücks liegt darin, dass das zumindest eine optische Halbleiterelement einfach ausgetauscht werden kann, wenn es beschädigt oder nicht mehr funktionsfähig ist. Dies kann insbesondere durch das Vordringen von Partikeln, Flüssigkeiten oder Gasen, zum Beispiel flüssiger oder gasförmiger Reinigungsmedien durch die Beleüchtungsvorrichtung bis zum optischen Halbleiterelement geschehen. Beim Austausch kann somit nur das nicht mehr funktionsfähige optische Halbleiterelement gewechselt werden, wohingegen das funktionsfähige Handstück weiterverwendet werden kann.

Des Weiteren kann das erfindungsgemäße Handstück für unterschiedliche Behandlungen verwendet werden, für die der Anwender bis jetzt mehrere Handstück benötigte. Damit werden Anschaffungskosten sowie Reinigungs- und Wartungsaufwand für den Anwender reduziert.

Die lösbare Verbindung des zumindest einen optischen Halbleiterelements mit dem Handstück kann durch alle bekannten lösbaren Verbindungsmittel hergestellt werden, zum Beispiel durch eine form- oder kraftschlüssige Verbindung, durch Klemm-, Schraub- oder Steckverbindungen.

Um das zumindest eine optische Halbleiterelement aus dem Handstück lösen und entnehmen zu können, kann das Handstück zweistückig aufgebaut sein, wobei die Trennstelle zwischen den beiden Handstückteilen bevorzugt in etwa dort vorgesehen ist, wo das Halbleiterelement angeordnet ist, so dass dieses gut zugänglich ist. Insbesondere können Kopf- und Griffteil des Handstücks voneinander trennbar sein und das zumindest eine optische Halbleiterelement im Bereich der Trennstelle angeordnet sein.

In einem bevorzugten Ausführungsbeispiel ist in der Außenhülse des Handstücks eine Öffnung vorgesehen ist, die derart ausgebildet ist, dass das zumindest eine optische Halbleiterelement durch diese Öffnung durchführbar ist. Damit entfällt die Notwendigkeit des zweistückigen Aufbaus des Handstücks mit einer zusätzlichen Trennstelle und mit entsprechenden Verbindungs- und Dichtmitteln. Die Öffnung muss insbesondere groß genug sein, damit das zumindest eine optische Halbleiterelement durchführbar ist, sie muss an einer Stelle der Außenhülse angeordnet sein, zu der das optische Halbleiterelement insbesondere vom Inneren des Handstücks Zugang hat oder wohin es bewegt, zum Beispiel verschoben werden kann, und sie soll auch an einer Stelle des Handstücks vorgesehen sein, die von außen gut zugänglich ist, so dass das optische Halbleiterelement für den Anwender einfach durch die Öffnung durchführbar ist.

Besonders bevorzugt wird als Öffnung zum Durchführen des optischen Halbleiterelements eine Öffnung verwendet, die auch eine weitere Aufgabe erfüllt, so dass keine zusätzliche Öffnung zum Durchführen des optischen Halbleiterelements in der Außenhülse des Handstücks vorzusehen ist. Als derartige Öffnung kann zum Beispiel die Lichtabgabeöffnung oder die Kupplungsöffnung dienen. Umfasst das Handstück eine Batterielade mit einer Öffnung, über die eine Batterie oder ein Akkumulator einsetzbar sind, so kann das optische Halbleiterelement auch über diese Öffnung in das Handstück eingeführt oder daraus entnommen werden.

In einem weiteren Ausführungsbeispiel ist das Handstück derart ausgebildet, dass das zumindest eine optische Halbleiterelement durch einen Innenraum des Handstücks bewegbar ist, insbesondere zu einer in der Außenhülse des Handstücks vorgesehenen Öffnung, durch die das optische Halbleiterelement durchführbar, d.h. aus dem Handstück entnehmbar bzw. in dieses einführbar ist. Dazu können entweder entsprechende Passagen, Durchlässe oder Freiräume im Inneren des Handstücks und zwischen darin angeordneten Bauteilen vorgesehen sein und / oder ein oder mehrere der im Handstück angeordneten Bauteile sind aus dem Handstück entnehmbar oder darin beweglich angeordnet, so dass das optische Halbleiterelement nach Entfernen dieser Bauteile durch den Innenraum des Handstücks bewegbar ist.

Es kann insbesondere vorgesehen sein, dass der Kopfteil des Handstücks beweglich, zum Beispiel verschiebbar zum Griffteil angeordnet ist, so dass das durch den Kopfteil im Handstück festgeklemmte optische Halbleiterelement in dem Handstück bewegbar ist. Des Weiteren können ein oder mehrere Bauteile, zum Beispiel Kupplungselemente zum Anschluss des Handstücks an eine Versorgungs- oder Antriebseinheit oder Medienleitungen derart am Handstück oder im Inneren des Handstücks angeordnet sein, dass sie verschiebbar oder aus dem Handstück entfernbar sind, so dass der Zugang zum auszutauschenden optischen Halbleiterelement oder dessen Entnahme aus dem Handstück möglich oder erleichtert wird.

In einem bevorzugten Ausführungsbeispiel ist das zumindest eine optische Halbleiterelement als Teil eines Beleuchtungsmoduls, insbesondere eines nach außen hermetisch abgeschlossenen Beleuchtungsmoduls ausgebildet, wobei das zumindest eine optische Halbleiterelement gemeinsam mit dem Beleuchtungsmodul aus dem Handstück lösbar ist. Die Integration des zumindest einen optischen Halbleiterelements in ein Beleuchtungsmodul hat mehrere Vorteile. So kann das Beleuchtungsmodul mit zusätzlichen Funktionselementen versehen sein, zum Beispiel ein oder mehreren Befestigungsmitteln zur lösbaren Verbindung des Beleuchtungsmoduls mit dem Handstück. Es können des Weiteren eine Drehsicherung oder Formschlusselemente vorhanden sein, die ein Verdrehen des Beleuchtungsmoduls verhindern bzw. das Einsetzen oder Befestigen des Beleuchtungsmoduls und des optischen Halbleiterelements nur in einer ausgewählten Position erlauben. Dies ist insbesondere für den passenden Anschluss des optischen Halbleiterelements an die Energiequelle von Bedeutung. Auch Dichtmittel, zum Beispiel zum Abdichten eines Innenraums des Handstücks zur Umgebung, Lichtleiter, Lichtabgabefenster, Schutzgläser oder Vergussmaterial, das die elektrischen Kontakte des zumindest einen optischen Halbleiterelements und die damit verbundenen elektrischen Leitungen oder Kontakte umgibt, verbindet und abdichtet, können am Beleuchtungsmodul vorgesehen sein.

Bevorzugt ist das Beleuchtungsmodul nach außen hermetisch abgeschlossen bzw. umfasst einen hermetisch abgeschlossenen Innenraum, in dem das zumindest eine optische Halbleiterelement aufgenommen ist. Dadurch ist das optische Halbleiterelement vor Beschädigungen, dem Eindringen von Stoffen etc. geschützt. Besonders bevorzugt ist die hermetische Abschirmung so ausgebildet, dass das optische Halbleiterelement sterilisierbar ist, also das mehrmalige Einbringen in eine Umgebung mit Temperaturen von zumindest 120°C, bevorzugt von 130°C, besonders bevorzugt von 134°C, und/oder mit Wasserdampf oder mit Chemikalien oder Gasen, insbesondere Desinfektionsmittel und / oder mit Druckschwankungen von etwa 1 bar unbeschadet übersteht. Die hermetische Abschirmung kann dabei durch eine Kapselung des zumindest einen optischen Halbleiterelements mit metallischen und / oder Kunststoffelementen erfolgen. Sie kann auch durch Abdecken des zumindest einen optischen Halbleiterelements mit aushärtbaren Kunststoffen oder Harzen, zum Beispiel Epoxidharzen erfolgen.

In dem Beleuchtungsmodul können des Weiteren mehrere optische Halbleiterelemente enthalten sein, so dass eine höhere Lichtabgabeleistung erzielbar ist. Gleichzeitig wird der Gebrauch der optischen Halbleiterelemente erleichtert, da die Vielzahl der optischen Halbleiterelemente gemeinsam gehandhabt, zum Beispiel ausgetauscht werden können.

In einem bevorzugten Ausführungsbeispiel ist die Beleuchtungsvorrichtung des Handstücks mit weiteren Bauteilen, wie zum Beispiel mit einem Lichtleiter und / oder mit einem optischen Element wie zum Beispiel einer Linse, und insbesondere mit elektrischen oder elektronischen Bauteilen, wie mit einer elektrischen Leitung und / oder mit elektrischen Kontakten und / oder mit einer Trägervorrichtung, bevorzugt einer Platine und / oder mit elektrischen Kupplungselementen und / oder mit elektrischen oder elektronischen Bauelementen wie Gleichrichtern, Widerständen, Transformatoren etc. verbunden, wobei zumindest eines dieser Bauteile mit dem zumindest einen optischen Halbleiterelement oder mit dem Beleuchtungsmodul aus dem Handstück lösbar ist.

Besonders bevorzugt handelt es sich bei dem mit dem optischen Halbleiterelement oder mit dem Beleuchtungsmodul gemeinsam lösbaren und austauschbaren Bauteil um die elektrischen Leitungen oder Kontakte, die zur Verbindung des optischen Halbleiterelements oder des Beleuchtungsmoduls mit einer Stromquelle dienen. Sind das optische Halbleiterelement oder das Beleuchtungsmodul gemeinsam mit den elektrischen Leitungen oder Kontakten aus dem Handstück lösbar, so können das optische Halbleiterelement oder das Beleuchtungsmodul und die elektrischen Leitungen oder Kontakte fest, also unlösbar miteinander verbunden werden, zum Beispiel verlötet, verschweißt und / oder durch ein Hüllmaterial, zum Beispiel ein Vergussmaterial, insbesondere durch ein Kunstharz, zum Beispiel Epoxidharz oder Silikonharz untrennbar umhüllt werden.

Diese unlösbare Verbindung hat den Vorteil, dass das optische Halbleiterelement oder das Beleuchtungsmodul nur in einer bestimmten Position in das Handstück eingebracht werden kann, nämlich derart, dass über die Leitungen oder Kontakte eine Verbindung zur Stromversorgung oder Stromquelle hergestellt werden kann, insbesondere dass die Leitungen oder Kontakte zur Stromquelle gewandt sind. Dadurch wird eine Möglichkeit geschaffen, das optische Halbleiterelement so in das Handstück einzusetzen, dass es korrekt an die Stromversorgung angeschlossen ist, d.h. dass der Plus- und Minuspol des optischen Halbleiterelements jeweils mit dem Plus- bzw. Minuspol der Gleichstromquelle verbunden ist, so dass der Anschluss an die Stromquelle entsprechend der Stromflussrichtung des optischen Halbleiterelements erfolgt. In vorteilhafter Weise kann damit verhindert werden, dass der Anwender das optische Halbleiterelement oder das Beleuchtungsmodul in einer zufälligen Position in das Handstück einsetzt und anschließend probieren muss, ob das optische Halbleiterelement oder das Beleuchtungsmodul richtig, d.h. in der passenden Stromflussrichtung im Handstück befestigt ist, und wenn dies nicht der Fall ist, das optische Halbleiterelement oder das Beleuchtungsmodul wieder aus dem Handstück entnommen und in einer anderen Position wieder eingesetzt werden muss.

Das Einbringen des Beleuchtungsmoduls in einer vorbestimmten Position in das Handstück hat noch weitere Vorteil, zum Beispiel wenn das Beleuchtungsmodul ein optisches Element, bevorzugt eine Linse, umfasst, die die vom optischen Halbleiterelement erzeugte Strahlung auf einen speziellen Punkt fokussiert, insbesondere auf die Spitze des im Handstück eingespannten Werkzeugs. Kann das Beleuchtungsmodul nur in einer Position in das Handstück eingefügt werden, so ist damit auch sicher gestellt, dass die Linse so im Handstück angeordnet ist, dass sie die Strahlung in die gewünschte Richtung und auf den gewünschten Punkt lenkt.

In einem weiteren Ausführungsbeispiel kann im Handstück zusätzlich eine Schaltung, insbesondere eine elektronische Schaltung vorgesehen sein, die die von der Stromquelle zur Verfügung gestellte Energie übernimmt und sie an die Bedürfnisse des zumindest einen optischen Halbleiterelements anpasst. Insbesondere übernimmt sie den Strom der Stromquelle unabhängig von dessen Polarität und gibt ihn mit einer definierten Polarität, passend zum mit der Schaltung verbundenen optischen Halbleiterelement wieder ab. Dazu kann zum Beispiel eine Verpolungsschutz-Schaltung, bestehend aus mehreren Dioden und gegebenenfalls weiteren Elementen, insbesondere eine so genannte Brückenschaltung oder eine Brückengleichrichterschaltung vorgesehen sein. Die Schaltung kann auch weitere Elemente wie Gleichrichter, Transformatoren, Wandler, Widerstände etc. umfassen um insbesondere die Stromstärke oder Spannung so aufzubereiten, dass sie für das angeschlossene optische Halbleiterelement geeignet ist. Üblicherweise wird ein derartiges optisches Halbleiterelement, zum Beispiel eine Leuchtdiode, mit Gleichstrom mit etwa 2 - 3 V und zumindest 20 mA, bevorzugt mehr als 50 mA betrieben.

Die Schaltung muss jedoch nicht zwingend im Handstück vorgesehen sein, sondern kann auch in anderen, mit dem Handstück verbundenen oder verbindbaren Instrumenten oder Gerätschaften enthalten sein, so dass der zum Handstück gelangende Strom bereits eine definierte Polung bzw. geeignete Stromparameter aufweist.

Die Erfindung wird nachfolgend anhand bevorzugter Ausführungsbeispiele und Bezug nehmend auf die beigefügten Zeichnungen erläutert:
Figur 1 zeigt ein erstes Ausführungsbeispiel eines medizinischen, insbesondere dentalen Handstücks mit einer aus dem Handstück lösbaren, zumindest ein optisches Halbleiterelement umfassenden Beleuchtungsvorrichtung.
Figur 2 zeigt als Vergrößerung den Vorderabschnitt des Handstücks gemäß Figur 1.
Figur 3 zeigt den Vorderabschnitt eines zweiten Ausführungsbeispiels eines medizinischen, insbesondere dentalen Handstücks mit einer aus dem Handstück lösbaren, zumindest ein optisches Halbleiterelement umfassenden Beleuchtungsvorrichtung.

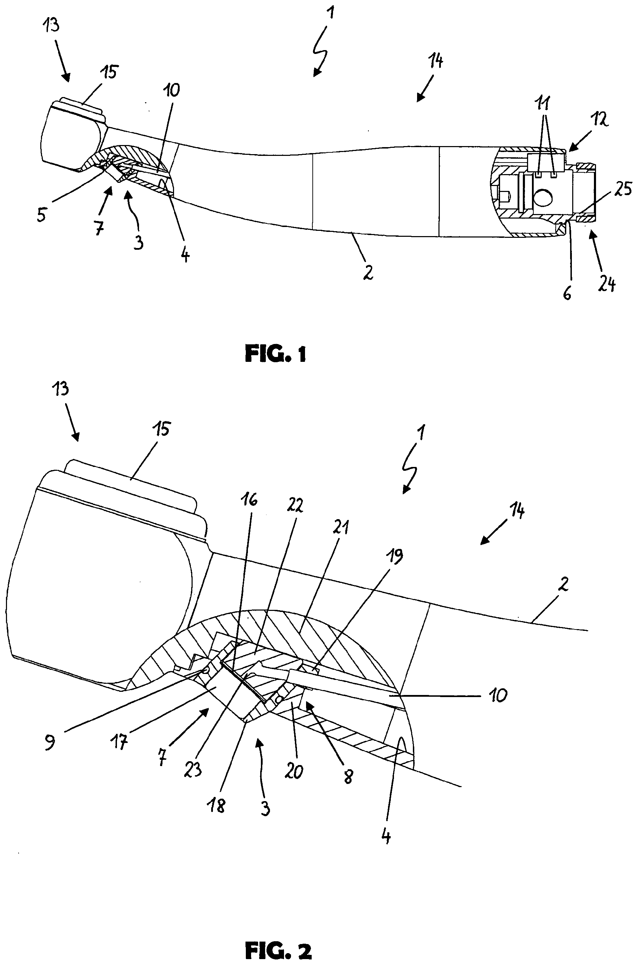

Das in den Figuren 1 und 2 dargestellte medizinische, insbesondere dentale Handstück 1 besteht aus einem Griffteil 14 und einem gewinkelt dazu angeordneten Kopfteil 13. Im Kopfteil 13 ist eine in Bewegung versetzbare, hier rotierende Werkzeugaufnahme angeordnet, in der ein Werkzeug, zum Beispiel ein in Rotation versetzbarer Bohrer aufgenommen werden kann. Das Werkzeug wird durch zumindest ein Antriebselement angetrieben, das mit dem Werkzeug verbunden ist, wobei das Antriebselement bevorzugt als eine rotierende Welle ausgebildet ist. Das Antriebselement kann je nach Art des Handstücks weitere Bauteile aufweisen, so zum Beispiel eine oder mehrere zusätzliche rotierende oder schwingende Wellen, ein oder mehrere Zahnräder oder Getriebe, einen Motor, ein Laufrad, einen Schwingungserreger usw.

An einem Ende des Kopfteils 13 ist ein Druckknopf 15 zur Bedienung einer Werkzeuglösevorrichtung vorgesehen, so dass ein in der Werkzeugaufnahme aufgenommenes oder eingespanntes Werkzeug aus der Werkzeugaufnahme gelöst werden kann. An dem dem Druckknopf 15 gegenüberliegenden Ende des Kopfteils 13 ist eine Werkzeugöffnung vorgesehen, durch die ein Werkzeug in die Werkzeugaufnahme einsetzbar ist. Das Werkzeug steht somit gewinkelt zur Längsachse des Griffteils 14 aus dem Kopfteil 13 heraus.

An dem dem Kopfteil 13 zugewandten Ende des Griffteils 14 ist eine Beleuchtungsvorrichtung 3 zur Abgabe von Strahlung auf eine Präparationsstelle angeordnet. Beleuchtungsvorrichtung 3 umfasst ein Beleuchtungsmodul 7 mit zumindest einem optischen Halbleiterelement. Das Beleuchtungsmodul 7 befindet sich in einer Lichtabgabeöffnung 5 der Außenhülse 2 des Handstücks 1, wobei der Großteil des Beleuchtungsmoduls bzw. des optischen Halbleiterelements im Inneren des Handstücks 1 aufgenommen ist. Dadurch stört das Beleuchtungsmodul 7 die Handhabung des Handstücks 1 nicht. Durch die Anordnung des Beleuchtungsmoduls 7 in unmittelbarer Nähe des Kopfteils 13 ist für die Abgabe der Strahlung auf die Präparationsstelle kein Lichtleiter notwendig.

Das zumindest eine optische Halbleiterelement ist in einem Innenraum des Beleuchtungsmoduls 7 aufgenommen, wobei gemäß einem bevorzugten Ausführungsbeispiel der Innenraum gegenüber der Umgebung hermetisch abgeschlossen ist, so dass das optische Halbleiterelement gemeinsam mit dem Handstück unterschiedlichen Reinigungs- und Pflegemaßnahmen, insbesondere Sterilisationen unterzogen werden kann. Der hermetisch abgeschlossene Innenraum wird von einem Sockel 16 und von einer damit dicht verbundenen, zum Beispiel verschweißten Kappe 17 gebildet. An der Kappe 17 ist des Weiteren ein Lichtabgabefenster vorgesehen, durch das die von dem optischen Halbleiterelement erzeugte Strahlung durchtreten kann. Anstelle des Lichtabgabefensters oder daran anschließend können weitere optische Elemente wie Lichtleiter oder Linsen vorgesehen sein. Diese optischen Elemente können als Teil des Beleuchtungsmoduls 7 oder als separate Bauteile ausgebildet sein.

Das Beleuchtungsmodul 7 besteht des Weiteren aus einer Fassung 18, die eine im Wesentlichen hülsenförmige, zylindrische Form hat und die von einer Bohrung durchsetzt ist. Die Fassung 18 ist bevorzugt aus elektrisch nicht leitendem Material hergestellt. In der Bohrung sind der Sockel 16 und die Kappe 17 aufgenommen. In dem dem Innenraum 4 zugewandten Ende der Fassung 18 befindet sich des Weiteren ein Vergussmassekörper 22, der insbesondere durch ein Kunstharz, zum Beispiel Epoxidharz oder Silikonharz gebildet ist. Der Vergussmassekörper 22 umhüllt das Vorderende der elektrische Leitung 10, die mit der Stromquelle verbunden ist, jenen Abschnitt der Leitung 10, der frei von einem isolierenden Schutzmantel ist. Der Vergussmassekörper 22 umgibt auch die elektrischen Kontakte 23 des als Leuchtdiode ausgebildeten optischen Halbleiterelements. Die Leitung 10 und die Kontakte 23 sind durch den Vergussmassekörper 22 unlösbar miteinander verbunden. Bevorzugt sind die Leitung 10 und die Kontakte 23 zusätzlich noch miteinander verlötet, verschweißt oder gekrimpt (verquetscht). Der Vergussmassekörper 22 dichtet das Beleuchtungsmodul 7 und die Kontakte 23 auch ab.

Am Außenmantel der Fassung 18 ist in einer Nut ein Dichtelement 9, zum Beispiel ein Dichtring aufgenommen, der zwischen der Außenhülse 2 des Handstücks 1 und dem Außenmantel der Fassung 18 geklemmt wird. Das Dichtelement 9 dichtet den Innenraum 4 des Handstücks 1 und die darin enthaltenen Bauteile von der Umgebung ab und verhindert das Eindringen von Partikeln, Verschmutzungen, Behandlungsmedien, Reinigungsmitteln etc. in das Handstück 1 sowie den Austritt von Schmiermittel aus dem Inneren des Handstücks 1. Eine derartige Dichtung kann alternativ oder zusätzlich auch am Handstück 1 selbst angebracht sein.

An der Fassung 18 sind des Weiteren Befestigungsmittel 8 vorgesehen, die zur Befestigung der Beleuchtungsvorrichtung 3 am Handstück 1 dienen. Die Befestigungsmittel umfassen einen Flansch 19, der an einem Ende der Fassung 18 angeordnet ist, und den Außenmantel der Fassung 18. Beleuchtungsmodul 7 ist in Lichtabgabeöffnung 5 eingesteckt, wobei der Außenmantel der Fassung 18 so bemessen ist, dass er eine klemmende Verbindung mit der Außenhülse 2 des Handstücks 1 eingeht. Außenhülse 2 weist zur Vergrößerung der reibenden oder klemmenden Kontaktfläche mit dem Außenmantel der Fassung 18 ein Befestigungselement 20 auf, zum Beispiel in Form von in den Innenraum 4 ragenden Vorsprüngen, Ringschultern etc. Ist die Fassung 18 vollständig in die Lichtabgabeöffnung 5 eingesteckt, so kontaktiert Flansch 19 das freie Ende des Befestigungselements 20, wodurch einerseits eine zusätzliche Fixierung als auch eine genaue Positionierung des Beleuchtungsmoduls 7 in der Lichtabgabeöffnung 5 erreicht wird.

Die Befestigung des Beleuchtungsmoduls 7 in der Lichtabgabeöffnung 5 wird zusätzlich auch noch durch den Kopfteil 13 bewirkt. Der Kopfteil 13 weist an seiner dem Griffteil 14 zugewandten Seite einen Fortsatz 21 auf, der zur Verbindung des Kopfteils 13 mit dem Griffteil 14 in den Innenraum 4 einsteckbar ist. Fortsatz 21 ist derart bemessen, dass er, wenn er in den Innenraum 4 eingesetzt ist, das Beleuchtungsmodul 7 kontaktiert und in Richtung der Lichtabgabeöffnung 5 drückt, so dass das Beleuchtungsmodul 7 fest in der Lichtabgabevorrichtung 5 fixiert ist.

Die Energieversorgung des zumindest einen optischen Halbleiterelements erfolgt über die elektrischen Pins oder Kontakte 23, die elektrische Leitung 10 und ein elektrisches Kupplungselement 12, das weitere elektrische Kontakte 11 umfasst. Der Anschluss des Handstücks 1 an die Energiequelle erfolgt in bekannter Weise über eine Kupplung 24, die bevorzugt als Drehkupplung ausgebildet ist. Zwischen dem Handstück 1 und der Energiequelle können selbstverständlich in bekannter Weise weitere Geräte wie Antriebsmotore, Kupplungen, Adapter, Steuergeräte, dentale Einheiten, Versorgungseinheiten etc. vorgesehen sein. Die elektrischen Kontakte 11 können je nach Art der Kupplung 24 unterschiedlich ausgebildet sein, zum Beispiel als Schleif-, Feder- oder Stiftkontakte.

Zwischen dem elektrischen Kupplungselement 12 und den Kontakten 23 können im Handstück 1 weitere elektrische oder elektronische Bauteile vorgesehen sein, insbesondere eine Schaltung, die die von der Stromquelle zur Verfügung gestellte Energie übernimmt und sie an die Bedürfnisse des zumindest einen optischen Halbleiterelements anpasst. Bevorzugt übernimmt die Schaltung den Strom der Stromquelle unabhängig von dessen Polarität und gibt ihn mit einer definierten Polarität an das optische Halbleiterelement ab.

Das elektrische Kupplungselement 12, die Kontakte 11 und gegebenenfalls auch die weiteren elektrischen oder elektronischen Bauteile können ebenfalls unlösbar mit der Beleuchtungsvorrichtung 3, insbesondere mit dem Beleuchtungsmodul 7 verbunden sein, so dass sie beim Entfernen der Beleuchtungsvorrichtung 3 gemeinsam mit dieser aus dem Handstück entnehmbar sind. Dies ist insbesondere dann von Vorteil, wenn die weiteren elektrischen oder elektronischen Bauteile spezielle Funktionen, zum Beispiel eine pulsierende Lichtabgabe, ausführen, die nur für bestimmte Anwendungen und damit nur für bestimmte optische Halbleiterelemente notwendig oder sinnvoll sind. Alternativ können das elektrische Kupplungselement 12, die Kontakte 11 und gegebenenfalls auch die weiteren elektrischen oder elektronischen Bauteile jedoch auch von der Beleuchtungsvorrichtung 3 trennbar ausgeführt sein, so dass sie bei einem Tausch der Beleuchtungsvorrichtung 3 im Handstück 1 verbleiben.

Das Lösen und Austauschen des Lichtmoduls 7 erfolgt über den Innenraum 4 des Handstücks 1 und die Kupplungsöffnung 6. Dazu muss der Anwender zuerst ein oder mehrere Bauteile im Handstück 1 und / oder Bauteile der Kupplung 24 vom Handstück 1 trennen, insbesondere das Kupplungsrohr 25. In einem nächsten Schritt löst er den Kopfteil 13 des Handstücks 1 vom Griffteil 14, wodurch das durch den Kopfteil 13 in die Lichtabgabeöffnung 5 gedrückte Beleuchtungsmodul 7 aus der Lichtabgabeöffnung 5 lösbar ist. Der Anwender übt nun von außen mit einem Finger oder einem Hilfswerkzeug Druck auf das Beleuchtungsmodul 7 aus, so dass dieses in den Innenraum 4 verschoben wird. Über die Kupplungsöffnung 6 zieht der Anwender schließlich das Beleuchtungsmodul 7 und bevorzugt auch die Leitung 10 aus dem Handstück 1 heraus.

Das Einfügen des Beleuchtungsmoduls 7 in das Handstück 1 erfolgt ebenfalls über den Innenraum 4 und die Kupplungsöffnung 6, in umgekehrter Reihenfolge wie es für das Lösen des Beleuchtungsmoduls 7 aus dem Handstück 1 beschrieben wurde.

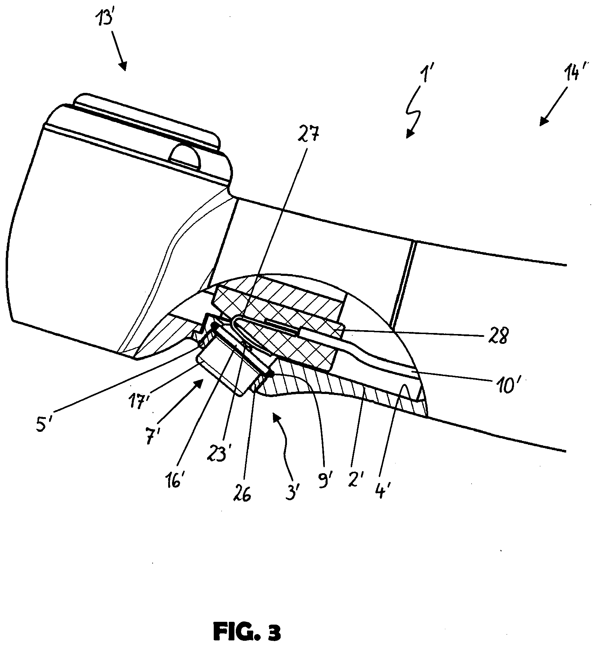

Das in Figur 3 dargestellte Handstück 1' entspricht in vielen Merkmalen dem Handstück 1, so dass im Folgenden insbesondere auf die Unterschiede eingegangen wird. Handstück 1' weist einen Kopfteil 13' und einen Griffteil 14' auf. In der Außenhülse 2' ist wiederum eine Lichtabgabeöffnung 5' vorgesehen, in DIE eine Beleuchtungsvorrichtung 3' mit einem Beleuchtungsmodul 7' und zumindest einem darin aufgenommenen optischen Halbleiterelement lösbar eingefügt ist. Das Beleuchtungsmodul 7' und insbesondere das zumindest eine optische Halbleiterelement sind im Wesentlichen wieder in der Lichtabgabeöffnung 5' der Außenhülse 2' und somit im Inneren des Handstücks 1' angeordnet.

Die Energieversorgung des Beleuchtungsmoduls 7' erfolgt über die elektrischen Kontakte 23' der Leuchtdiode und eine elektrische Leitung 10', die über ein federndes, elektrisches Kontaktelement 27 miteinander verbunden sind. Die Verbindung zwischen den Kontakten 23' und Kontaktelement 27 ist lösbar, so dass bei der Entnahme des Beleuchtungsmoduls 7' aus dem Handstück, die Leitung 10' und das Kontaktelement 27 im Handstück 1' verbleiben. Ein elektrisch isolierender Kontakthalter 28, der zum Beispiel aus Kunststoff oder Kunstharz besteht, umgibt und verbindet Leitung 10' und Kontaktelement 27 und dichtet den Innenraum 4' des Handstücks 1' gegen die Umgebung ab.

Im Unterschied zu dem Handstück 1 aus den Figuren 1 und 2 erfolgt beim Handstück 1' der Austausch des Beleuchtungsmoduls 7' und insbesondere des zumindest einen optischen Halbleiterelements durch die Lichtabgabeöffnung 5'. Dies ermöglicht dem Anwender einen äußerst komfortablen und raschen Austausch des Beleuchtungsmoduls 7'.

Zum Austausch des Beleuchtungsmoduls 7' ist ein Schraubring 26 vorgesehen, der an seiner Außenseite ein Außengewinde hat. Die Außenhülse 2' ist im Bereich der Lichtabgabeöffnung 5' mit einem entsprechenden Innengewinde versehen, so dass der Schraubring 26 mit der Außenhülse 2' verschraubbar ist. Beleuchtungsmodul 7' umfasst wiederum einen Sockel 16' und eine Kappe 17', wobei der Sockel 16' einen etwas größeren Durchmesser als die Kappe 17' aufweist. Sind der Sockel 16' und die Kappe 17' miteinander verbunden, so steht der Außenbereich des Sockels 16' über die Kappe 17' vor und bildet einen Ringbund, der durch den eingeschraubten Schraubring 26 in der Außenhülse 2' fixiert wird. Im Bereich des Sockels 16' ist wiederum ein Dichtelement 9' vorgesehen, das den Innenraum 4' des Handstücks 1' gegen die Umgebung abdichtet.

Die Erfindung ist nicht auf die beschriebenen Ausführungsbeispiele beschränkt, sondern umfaßt alle Ausführungsmöglichkeiten, die das prinzipielle, sinngemäße Funktionsprinzip der Erfindung nicht verändern. So kann die Form des Handstücks deutlich von der in den Figuren 1 - 3 dargestellten Form abweichen und zum Beispiel auch gerade oder pistolenförmig ausgebildet sein. Ebenso können sich Anwendung und Funktion des Handstücks von den dargestellten Beispielen unterscheiden und jeglichen medizinischen, insbesondere dentalen, chirurgischen oder orthopädischen Bereich betreffen. Auch die Art und Bewegungsrichtung des Werkzeugs ist variabel und kann zum Beispiel neben rotierenden auch oszillierende oder hin und her bzw. auf und ab bewegte Werkzeuge umfassen, genau so wie Feilen, Sägeblätter, Meissel, vibrierende Zahnsteinentfernungswerkzeuge, in Rotation versetzbare Bürsten, Kappen und andere prophylaktische Geräte.

Es besteht auch die Möglichkeit, das zumindest eine optische Halbleiterelement mit Wechselstrom oberhalb der so genannten Flimmerfrequenz (entsprechend etwa 25 Hz Wechselspannung) zu betreiben, wodurch für das menschliche Auge der Eindruck einer konstanten, nicht unterbrochenen Lichtabgabe entsteht. Die Wechselstromquelle kann dabei im Handstück oder außerhalb des Handstücks vorgesehen sein.

## Patentansprüche

1. Medizinisches, insbesondere dentales Handstück (1, 1') mit einer Außenhülse (2, 2'), einer Werkzeugaufnahme für ein in Bewegung versetzbares Werkzeug, zumindest einem Antriebselement, um das Werkzeug in Bewegung zu versetzen, und mit einer Beleuchtungsvorrichtung (3, 3') zur Abgabe von Strahlung auf eine Präparationsstelle, wobei die Beleuchtungsvorrichtung (3, 3') zumindest ein optisches Halbleiterelement umfasst, das zumindest teilweise im Inneren des Handstücks (1, 1') angeordnet ist, wobei die Beleuchtungsvorrichtung (3, 3') eine Fassung (18) sowie elektrische Kontakte (23) oder elektrische Pins aufweist, die zur Energieversorgung des zumindest einen optischen Halbleiterelements mit einer elektrischen Leitung (10) verbunden sind, wobei die elektrische Leitung (10) einen Abschnitt mit einem isolierenden Schutzmantel und einen Abschnitt, der frei von einem isolierenden Schutzmantel ist, aufweist, **dadurch gekennzeichnet, dass** ein Hüllmaterial vorgesehen ist, das die elektrischen Kontakte (23) oder elektrischen Pins und den Abschnitt der elektrischen Leitung (10), der frei von einem isolierenden Schutzmantel ist, vollständig umgibt und abdichtet und unlösbar miteinander verbindet.

2. Handstück (1, 1') nach Anspruch 1, **dadurch gekennzeichnet, dass**
die elektrischen Kontakte (23) oder elektrischen Pins und die elektrische Leitung (10) miteinander verlötet, verschweißt oder verquetscht sind.

3. Handstück (1, 1') nach einem der vorhergehenden Ansprüche, **dadurch gekennzeichnet, dass**
das Hüllmaterial einen Vergussmassekörper (22) umfasst.

4. Handstück (1, 1') nach Anspruch 3, **dadurch gekennzeichnet, dass**
das zumindest eine optische Halbleiterelement als Teil eines Beleuchtungsmoduls (7, 7') ausgebildet ist, wobei der Vergussmassekörper (22) am Beleuchtungsmodul (7, 7'), insbesondere in einer Fassung (18) des Beleuchtungsmoduls (7, 7'), angeordnet ist.

5. Handstück (1, 1') nach Anspruch 4, **dadurch gekennzeichnet, dass**
das Beleuchtungsmodul (7, 7') einen nach außen hermetisch abgeschlossenen Innenraum zur Aufnahme des zumindest einen optischen Halbleiterelements aufweist.

6. Handstück (1, 1') nach Anspruch 4 oder 5, **dadurch gekennzeichnet, dass**
das Beleuchtungsmodul (7, 7') eine Fassung (18) aus elektrisch isolierendem Material umfasst.

7. Handstück (1, 1') nach einem der vorhergehenden Ansprüche, **dadurch gekennzeichnet, dass**
das optische Halbleiterelement lösbar mit dem Handstück (1, 1') verbunden ist, wobei das Handstück (1, 1') derart ausgebildet ist, dass das zumindest eine optische Halbleiterelement zum Lösen aus dem Handstück (1, 1') durch einen Innenraum (4) des Handstücks (1, 1') bewegbar ist.

8. Handstück (1, 1') nach einem der Ansprüche 3 - 7, **dadurch gekennzeichnet, dass**
das Handstück (1, 1') einen Kopfteil (13) und einen Griffteil (14) aufweist, wobei am Kopfteil (13) ein Fortsatz (21) zur Verbindung des Kopfteils (13) mit dem Griffteil (14) vorgesehen ist und wobei der Fortsatz (21) den Vergussmassekörper (22) kontaktiert.

9. Handstück (1, 1') nach einem der vorhergehenden Ansprüche, **dadurch gekennzeichnet, dass**
zwischen der Außenhülse (2) des Handstücks (1, 1') und einer Fassung (18) der Beleuchtungsvorrichtung (3, 3') oder am Sockel (16') des Beleuchtungsmoduls (7') ein Dichtelement (9, 9') vorgesehen ist.

10. Handstück (1, 1') nach einem der vorhergehenden Ansprüche, **dadurch gekennzeichnet, dass**
das Hüllmaterial zumindest einen Teil des isolierenden Schutzmantels der elektrischen Leitung (10) umhüllt.

11. Handstück (1, 1') nach einem der vorhergehenden Ansprüche, **dadurch gekennzeichnet, dass**
die Beleuchtungsvorrichtung (3, 3') ein Lichtabgabefenster, eine die Beleuchtungsvorrichtung (3, 3') an ihrem Umfang umgebende Fassung (18, 18') und eine von dem Lichtabgabefenster abgewandten Seite mit den elektrischen Kontakten (23) oder den elektrischen Pins aufweist, wobei das Hüllmaterial an der dem Lichtabgabefenster abgewandten Seite vorgesehen ist.

12. Handstück (1, 1') nach einem der vorhergehenden Ansprüche, **dadurch gekennzeichnet, dass**
das Handstück (1, 1') zweistückig aufgebaut ist, um das zumindest eine optische Halbleiterelement aus dem Handstück (1, 1') lösen und entnehmen zu können, wobei die Trennstelle zwischen den beiden Handstückteilen in etwa dort vorgesehen ist, wo das Halbleiterelement angeordnet ist.

13. Handstück (1, 1') nach einem der Ansprüche 1 - 11, **dadurch gekennzeichnet, dass**
in der Außenhülse (2, 2') des Handstücks (1, 1') eine Lichtabgabeöffnung (5) vorgesehen ist, die derart ausgebildet ist, dass das zumindest eine optische Halbleiterelement durch diese Lichtabgabeöffnung (5) durchführbar ist.

14. Handstück (1, 1') nach einem der vorhergehenden Ansprüche, **gekennzeichnet durch** eine Schaltung, welche die von einer Stromquelle zur Verfügung gestellte elektrische Energie unabhängig von deren Polarität übernimmt und diese mit einer definierten Polarität, passend zum mit der Schaltung verbundenen optischen Halbleiterelement abgibt.

15. Handstück (1, 1') nach einem der Ansprüche 5 - 14, **dadurch gekennzeichnet, dass** in dem Beleuchtungsmodul (7, 7') mehrere optische Halbleiterelemente enthalten sind.

## Claims

1. A medical, in particular dental handpiece (1, 1') having an outer sleeve (2, 2'), a tool receptacle for a tool that can be set in motion, at least one drive element to set the tool in motion and having a lighting device (3, 3') for emitting radiation onto a preparation site, wherein the lighting device (3, 3') comprises at least one optical semiconductor element which is arranged at least partially in the interior of the handpiece (1, 1'), wherein the lighting device (3, 3') comprises a lamp socket (18) and electric contacts (23) or electric pins, which are connected to an electric line (10) to supply energy to the at least one optical semiconductor element, wherein the electric line (10) comprises a section having an insulating protective sheath and a section that is free of any insulating protective sheath, **characterized in that** an encasing material is provided that fully encases and seals and undetachbly connects the electric contacts (23) or electric pins and the section of the electric line (10) that is free of any insulating protective sheath.

2. The handpiece (1, 1') according to Claim 1, **characterized in that**
the electric contacts (23) or electric pins and the electric line (10) are soldered, welded or crimped together.

3. The handpiece (1, 1') according to any one of the preceding claims, **characterized in that**
the encasing material comprises a casting compound body (22).

4. The handpiece (1, 1') according to Claim 3, **characterized in that**
the at least one optical semiconductor element is configured as part of a lighting module (7, 7'), wherein the casting compound body (22) is arranged at the lighting module (7, 7'), in particular in a socket (18) of the lighting module (7, 7').

5. The handpiece (1, 1') according to Claim 4, **characterized in that**
the lighting module (7, 7') comprises an interior that is hermetically sealed toward the outside to receive the at least one optical semiconductor element.

6. The handpiece (1, 1') according to Claim 4 or 5, **characterized in that**
the lighting module (7, 7') comprises a socket (18) made of electrically insulating material.

7. The handpiece (1, 1') according to any one of the preceding claims, **characterized in that**
the optical semiconductor element is detachably connected to the handpiece (1, 1'), wherein the handpiece (1, 1') is configured such that the at least one optical semiconductor element can be moved through an interior (4) of the handpiece (1, 1') to remove the at least one optical semiconductor element from the handpiece (1, 1').

8. The handpiece (1, 1') according to any one of the claims 3 - 7, **characterized in that**
the handpiece (1, 1') comprises a head part (13) and a handle part (14), wherein a protrusion (21) is provided on the head part (13) for connecting the head part (13) to the handle part (14) and wherein the protrusion (21) contacts the compound body (22).

9. The handpiece (1, 1') according to any one of the preceding claims, **characterized in that**
a seal element (9, 9') is provided between the outer sleeve (2, 2') of the handpiece (1, 1') and a socket (18) of the lighting device (3, 3') or at the base (16') of the lighting module (7').

10. The handpiece (1, 1') according to any one of the preceding claims, **characterized in that**
the encasing material encases at least a part of the insulating protective sheath of the electric line (10).

11. The handpiece (1, 1') according to any one of the preceding claims, **characterized in that**
the lighting device (3, 3') comprises a light emitting window, a socket (18, 18') surrounding the lighting device (3, 3') at its circumference and a side facing away from the light emitting window and having the electric contacts (23) or electric pins, wherein the encasing material is provided on the side facing away from the light emitting window.

12. The handpiece (1, 1') according to any one of the preceding claims, **characterized in that**
the handpiece (1, 1') is configured in two parts in order to be able to detach and remove the at least one optical semiconductor element from the handpiece (1, 1'), with the separation point between the two handpiece parts being provided approximately at the location where the semiconductor element is arranged.

13. The handpiece (1, 1') according to any one of the Claims 1 - 11, **characterized in that** a light emitting opening (5) is provided in the outer sleeve (2, 2') of the handpiece (1, 1') which is configured such that the at least one optical semiconductor element can be passed through this light emitting opening (5).

14. The handpiece (1, 1') according to any one of the preceding claims, **characterized by** a circuit which receives the electric energy supplied by a current source regardless of its polarity and delivers it with a defined polarity which is suitable for the optical semiconductor element connected to the circuit.

15. The handpiece (1, 1') according to any one of the Claims 5 - 14, **characterized in that** the lighting module (7, 7') comprises a plurality of optical semiconductor elements.

## Revendications

1. Pièce à main médical, en particulier dentaire (1, 1') pourvue d'un manchon extérieur (2, 2'), d'un raccord d'outil, destiné à un outil susceptible d'être mis en mouvement, d'au moins un élément d'entraînement, destiné à mettre l'outil en mouvement, et d'un dispositif d'éclairage (3, 3'), destiné à diffuser un rayonnement sur un point de préparation, le dispositif d'éclairage (3, 3') comprenant au moins un élément optique semi-conducteur, qui est placé au moins en partie à l'intérieur de de la pièce à main (1, 1'), le dispositif d'éclairage (3, 3') comportant une douille (18) ainsi que des contacts électriques (23) ou des broches électriques, qui pour l'approvisionnement en énergie de l'au moins un élément optique semi-conducteur sont relié(e)s avec un conduit électrique (10), le conduit électrique (10) comportant un tronçon pourvu d'une gaine protectrice isolante et un tronçon qui est exempt d'une gaine protectrice, **caractérisée en ce**
**qu'**il est prévu une matière de gainage qui entoure totalement et qui assure l'étanchéité des contacts électriques (23) ou des broches électriques et du tronçon de conduit électrique (10), qui est exempt d'une gaine protectrice isolante et qui les assemble les uns avec les autres de manière indissociable.

2. Pièce à main (1, 1') selon la revendication 1, **caractérisée en ce que** les contacts électriques (23) ou les broches électriques et le conduit électrique (10) sont brasés, soudés ou écrasés les uns avec les autres.

3. Pièce à main (1, 1') selon l'une quelconque des revendications précédentes, **caractérisée en ce que**
la matière de gainage comprend un corps en masse de scellement (22).

4. Pièce à main (1, 1') selon la revendication 3, **caractérisée en ce que**
l'au moins un élément optique semi-conducteur est conçu en tant qu'élément d'un module d'éclairage (7, 7'), le corps en masse de scellement (22) étant placé sur le module d'éclairage (7, 7'), en particulier dans une douille (18) du module d'éclairage (7, 7').

5. Pièce à main (1, 1') selon la revendication 4, **caractérisée en ce que**
le module d'éclairage (7, 7') comporte un espace intérieur hermétiquement fermé vers l'extérieur, destiné au logement de l'au moins un élément optique semi-conducteur.

6. Pièce à main (1, 1') selon la revendication 4 ou 5, **caractérisée en ce que**
le module d'éclairage (7, 7') comprend une douille (18) en matière électriquement isolante.

7. Pièce à main (1, 1') selon l'une quelconque des revendications précédentes, **caractérisée en ce que**
l'élément optique semi-conducteur est assemblé de manière amovible avec la pièce à main (1, 1'), la pièce à main (1, 1') étant conçue de telle sorte que pour le détacher de la pièce à main (1, 1'), l'au moins un élément optique semi-conducteur est déplaçable à travers un espace intérieur (4) de la pièce à main (1, 1').

8. Pièce à main (1, 1') selon l'une quelconque des revendications 3 à 7, **caractérisée en ce que**
la pièce à main (1, 1') comporte une partie tête (13) et une partie manche (14), sur la partie tête (13), un prolongement (21) étant prévu pour assembler la partie tête (13) avec la partie manche (14) et le prolongement (21) entrant en contact avec le corps en masse de scellement (22).

9. Pièce à main (1, 1') selon l'une quelconque des revendications précédentes, **caractérisée**
**en ce qu'**entre le manchon extérieur (2) de la pièce à main (1, 1') et une douille (18) du dispositif d'éclairage (3, 3') ou sur le socle (16') du module d'éclairage (7') est prévu un élément d'étanchéité (9, 9').

10. Pièce à main (1, 1') selon l'une quelconque des revendications précédentes, **caractérisée en ce que**
la matière de gainage enveloppe au moins une partie de la gaine protectrice isolante du conduit électrique (10).

11. Pièce à main (1, 1') selon l'une quelconque des revendications précédentes, **caractérisée en ce que**
le dispositif d'éclairage (3, 3') comporte une fenêtre distributrice de lumière, une douille (18, 18') entourant le dispositif d'éclairage (3, 3') sur sa circonférence et une face opposée à la fenêtre distributrice de lumière pourvue des contacts électriques (23) ou des broches électriques, la matière de gainage étant prévue sur la face opposée à la fenêtre distributrice de lumière.

12. Pièce à main (1, 1') selon l'une quelconque des revendications précédentes, **caractérisée en ce que**
la pièce à main (1, 1') est conçue en deux parties, permettant de détacher l'au moins un élément optique semi-conducteur et de le retirer de la pièce à main (1, 1'), la zone de séparation entre les deux parties de la pièce à main étant prévue environ là, où est placé l'élément semi-conducteur.

13. Pièce à main (1, 1') selon l'une quelconque des revendications 1 à 11, **caractérisée en ce que**
dans le manchon extérieur (2, 2') de la pièce à main (1, 1') est prévu un orifice distributeur de lumière (5) qui est conçu de telle sorte que l'au moins un élément optique semi-conducteur puisse traverser l'orifice distributeur de lumière (5).

14. Pièce à main (1, 1') selon l'une quelconque des revendications précédentes, **caractérisé par**
un circuit qui reprend l'énergie électrique mise à disposition par une source électrique, indépendamment de sa polarité et la restitue avec une polarité définie de manière adaptée vers l'élément optique semi-conducteur connecté sur le circuit.

15. Pièce à main (1, 1') selon l'une quelconque des revendications 5 à 14, **caractérisée en ce que**
dans le module d'éclairage (7, 7') sont contenus plusieurs éléments optiques semiconducteurs.
